# EUROPEAN PATENT SPECIFICATION

(11) **EP 2 367 090 B1**
(45) Date of publication and mention of the grant of the patent: **26.06.2013**
(21) Application number: 10156920.0
(22) Date of filing: 18.03.2010
(51) Int. Cl.: G06F 1/24

(54) **Electronic control module with boot pin arrangement**
Elektronisches Steuermodul mit Boot-Pin-Anordnung
Module de commande électronique avec disposition de broche d'amorçage

(43) Date of publication of application: 21.09.2011
(73) Proprietor: Delphi Technologies, Inc., Troy, MI 48007 (US)
(72) Inventor: Marx, Edwin Herbert, 54526 Landscheid (DE); Wachter, Georges, 2625 Luxembourg (LU)
(74) Representative: Robert, Vincent

(56) References cited:
- WO-A2-2008/027969
- FR-A1- 2 454 137
- US-A- 4 531 198
- US-A1- 2008 162 854

## Description

### TECHNICAL FIELD

The present invention relates generally to electronic control module for vehicle, more particularly for engine and power train control (Engine Management System), having controller flash architectures.

### BACKGROUND OF THE INVENTION

Modem microcontroller architectures with non volatile memories (e.g. flash) use in most cases similar software strategies to startup. It is basically a small independent piece of software executed right after hardware initialization. This software is called boot software or boot code software.

Electronic control module for a vehicle comprising a micro controller, a reprogrammable memory with a dedicated area for boot software, input/output interfaces for its basic functions and - communication ports used for communication between the control module and an outside component. The outside component can be another control module, a sensor, a tester or a reprogramming device.

An example of electronic control module is disclosed in US2008/0162854A1.

It is a main requirement to have early in project development until late in the field application a stabile boot software resident in flash. It shall allow a recovery of the "brain dead" microcontroller when the reprogramming procedure has been distorted. Possible reasons for distortions are: power loss, communication problems (cable loss...), wrong or invalid software.

Since the boot software shall be small, fast and simple it is very difficult to do complex checks on the main flash content before execution. Therefore these checks are rather simple (main entry criteria). It is also difficult to detect invalid application software with an embedded procedure in a reliable way.

The easiest way to recover the electronic control module in case of brain dead situation is an external action forcing the microcontroller to remain in boot software execution. Generally, a keyboard, a jumper, or a discrete product pin is used for this boot function.

Existing solutions are not fully satisfying since an automotive controller is usually built in a case protecting the control circuit from environmental impacts. This case is usually not designed to be opened and it is not provided with any keyboard. Therefore, the only way to access a boot control circuit for reprogramming are external pins provided on the case. On the other hand a case with a dedicated pin for boot circuit activation is costly and generates risks of unintended rebooting by harness errors.

### SUMMARY OF THE INVENTION

An object of the present invention is to solve the above mentioned problems in order to reduce costs and prevent unintended rebooting activation.

The invention provides an additional function on one of the normal input/output interfaces/pins to activate the boot circuit.

Now the electronic control module for a vehicle will comprise a micro controller, a reprogrammable memory with a dedicated area for boot software, a new boot circuit hardware, input/output interfaces for its basic functions and communication ports used for communication between an outside component and the control module.

The rebooting function shall become active when the selected pin is pulled very negative (DC voltage). A circuit can be added to an existing pin and provides the boot pin function almost without any disturbance of the usual pin function.

Since nearly all controllers are referenced to a vehicle ground structure, input signals are positive referenced to this ground. Significant negative DC voltages (below -1V) are not present in a normal vehicle controller environments. The boot circuit can be designed to enable boot loader procedure when the external DC voltage on the input pin is very negative (e.g.: lower than -6 or - 6.5V).

The needed internal hardware effort to implement the invention is very similar to current practice, very low in cost and easy to implement. A dedicated pin for the boot function only is not needed anymore.

The invention also provides a boot loader method for an electronic control module as mentioned above comprising the steps of:
- connecting the input pin normally used for some other functionality than rebooting to a negative voltage source in order to provide a boot loader signal to the control module,
- processing of the negative voltage by the boot circuit for detection of the boot loader signal and implementation of the boot loader procedure.

Other features of the present invention will be more apparent in connection with the following description of the preferred embodiment and in connection with the claims attached.

### BRIEF DESCRIPTION OF THE DRAWINGS

The present invention is now described by way of example with reference to the accompanying drawings in which:
- figure 1 is a block diagram showing a preferred embodiment of the electronic control module comprising a boot circuit according to the present invention;
- figure 2 is an electronic circuit diagram showing an example of boot circuit according to the present invention.

### DESCRIPTION OF THE PREFERRED EMBODIMENT

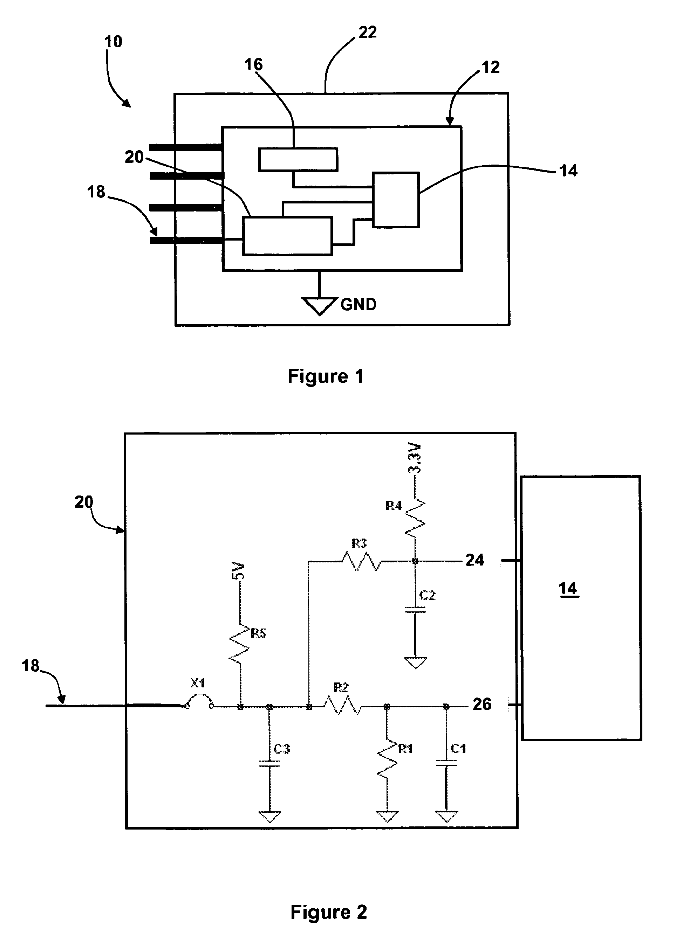

A preferred embodiment of the electronic control module 10 for a vehicle according to the invention is shown on figure 1. It comprises a control circuit 12 including a microcontroller 14, a reprogrammable memory unit 16, at least one input pin 18, and a boot circuit 20.

According to alternatives to the present embodiment, the reprogrammable memory unit 16 could use another type of non-volatile memory technology such an EEPROM (Electrically-Erasable Programmable Read-Only Memory) or a MRAM (Magnetic Random Access Memory).

It should be noted that the reprogrammable memory unit 16 could be integrated inside the microcontroller 14. Single-chip microcontrollers have a flash memory and a microcontroller on one chip.

Advantageously, the electronic control module 10 is built in a closed case 22, said input pin 18 being accessible through the case 22. The input pin 18 is used under normal operating conditions for some useful functionality, other than boot loader procedure, using positive voltages referenced to the ground. As for useful functionality, the input pin 18 can be used for example for discrete input, for frequency measurement, or for other communication purposes. For these purposes, the input pin 18 is connected to an outside component and a positive voltage referenced to the ground GND is applied to the input pin 18.

Preferably, the input pin 18 should be independent from the communication pins to avoid a disturbance on the communication. Any input pin (discrete, analog, communication) could be taken except of the communication pin used for reprogramming.

According to the teachings of the present invention, the boot circuit 20 is connected to the input pin 18 and is designed such that the boot loader procedure, or boot loader request, is triggered when a negative direct current voltage signal is applied to the input pin 18. Preferably, the absolute value of the negative voltage signal is greater than a predetermined value. The negative voltage signal for the boot loader procedure can be -6 or -6.5 volts. This negative voltage signal could be generated through a battery reversely connected to the input pin 18 and to the ground GND. The battery would be used as a key for activating the boot procedure. The case 22 may be connected to the ground GND or there could be a ground GND pin.

On figure 2, an example of a boot circuit 20 is shown. Said boot circuit 20 allows detection and processing of the negative voltage applied on the input pin 18 by generating a rebooting request transmitted to the microcontroller 14 through an instruction pin 24.

When a positive voltage is applied to the input pin 18, the boot circuit 20 will not generate the rebooting information and the input voltage will be processed as a normal input signal generating input information which is transmitted to the microcontroller 14 through an alternative input pin 26.

## Claims

1. Electronic control module (10) for a vehicle comprising a control circuit (12) connected to ground including a controller (14), a reprogrammable memory unit (16) having a resident boot software, a circuit (20) allowing implementation of a module boot loader procedure involving said boot software, and an input pin (18) used under normal operating conditions for communication between an outside component and the control circuit (12), **characterized by** said circuit (20) being connected to the input pin (18), said circuit (20) being adapted to trigger the boot loader procedure on receipt of a negative voltage signal with respect to ground on the input pin (18) by generating a rebooting request transmitted to the controller (14) through an instruction pin (24), and said circuit (20) being adapted to transmit a positive voltage signal with respect to ground on the input pin (18) to the controller (14) through an alternative input pin (26), no rebooting information being generated by said circuit (20), the positive voltage being processed as a normal input signal generating input information which is transmitted to the controller (14) through the alternative input pin (26).

2. Electronic control module (10) according to claim 1, **characterized by** said negative voltage signal being a direct current voltage.

3. Electronic control module (10) according to claim 2, **characterized by** the absolute value of the negative voltage signal being greater than a predetermined value.

4. Electronic control module (10) according to claim 3, **characterized by** said predetermined value being greater than 6 volts.

5. Electronic control module (10) according to anyone of the preceding claims, **characterized by** the control circuit (12) being built in a closed case (22).

6. Electronic control module (10) according to anyone of the preceding claims, **characterized by** said input pin (18) being used under normal operating conditions with positive voltages.

7. Electronic control module (10) according to anyone of the preceding claims, **characterized by** the reprogrammable memory unit (16) being a non-volatile memory unit such as a flash memory unit, or an EEPROM unit, or a MRAM unit.

## Patentansprüche

1. Elektronisches Steuerungsmodul (10) für ein Fahrzeug, das aufweist eine Steuerungsschaltung (12), die mit Masse verbunden ist, mit einer Steuervorrichtung (14), einer wiederprogrammierbaren Speichereinheit (16) mit einer residenten Boot-Software, einer Schaltung (20), die eine Implementierung eines Modul-Boot-Lader-Verfahrens mit der Boot-Software ermöglicht, und einem Eingangspin (18), der unter normalen Betriebsbedingungen für eine Kommunikation zwischen einer Außenkomponente und der Steuerungsschaltung (12) verwendet wird, **dadurch gekennzeichnet, dass** die Schaltung (20) mit dem Eingangspin (18) verbunden ist, wobei die Schaltung (20) ausgebildet ist, das Boot-Lader-Verfahren auszulösen bei Empfang eines "negative Spannung"-Signals hinsichtlich der Masse an dem Eingangspin (18) durch Erzeugen einer Boot-Anforderung, die an die Steuervorrichtung (14) über einen Anweisungspin (24) übertragen wird, und die Schaltung (20) ausgebildet ist zum Übertragen eines "positive Spannung"-Signals hinsichtlich der Masse an dem Eingangspin (18) an die Steuervorrichtung (14) über einen alternativen Eingangspin (26), wobei keine Boot-Information von der Schaltung (20) erzeugt wird, die positive Spannung als ein normales Eingangssignal verarbeitet wird, das Eingangsinformation erzeugt, die an die Steuervorrichtung (14) über den alternativen Eingangspin (26) übertragen wird.

2. Elektronisches Steuerungsmodul (10) gemäß Anspruch 1, **dadurch gekennzeichnet, dass** das "negative Spannung"-Signal eine Gleichspannung ist.

3. Elektronisches Steuerungsmodul (10) gemäß Anspruch 2, **dadurch gekennzeichnet, dass** der Absolutwert des "negative Spannung"-Signals größer ist als ein vorgegebener Wert.

4. Elektronisches Steuerungsmodul (10) gemäß Anspruch 3, **dadurch gekennzeichnet, dass** der vorgegebene Wert größer als 6 Volt ist.

5. Elektronisches Steuerungsmodul (10) gemäß einem der vorhergehenden Ansprüche, **dadurch gekennzeichnet, dass** die Steuerungsschaltung (12) in einem geschlossenen Gehäuse (22) eingebaut ist.

6. Elektronisches Steuerungsmodul (10) gemäß einem der vorhergehenden Ansprüche, **dadurch gekennzeichnet, dass** der Eingangspin (18) unter normalen Betriebsbedingungen mit positiven Spannungen verwendet wird.

7. Elektronisches Steuerungsmodul (10) gemäß einem der vorhergehenden Ansprüche, **dadurch gekennzeichnet, dass** die wiederprogrammierbare Speichereinheit (16) eine nicht-flüchtige Speichereinheit ist, wie eine Flash-SpeicherEinheit, oder eine EEPROM-Einheit oder eine MRAM-Einheit.

## Revendications

1. Module de commande électronique (10) pour un véhicule, comprenant un circuit de commande (12) connecté à la terre et incluant un contrôleur (14), une unité à mémoire reprogrammable (16) ayant un logiciel d'amorçage résident, un circuit (20) permettant la mise en oeuvre d'une procédure de chargement d'amorçage du module impliquant ledit logiciel d'amorçage, et une broche d'entrée (18) utilisée dans des conditions de fonctionnement normales pour la communication entre un composant extérieur et le circuit de commande (12), **caractérisé en ce que** ledit circuit (20) est connecté à la broche d'entrée (18), ledit circuit (20) étant adapté à déclencher la procédure de chargement d'amorçage à la réception d'un signal à voltage négatif par rapport à la terre sur la broche d'entrée (18) en générant une requête de réamorçage transmise au contrôleur (14) via une broche d'instruction (24), et ledit circuit (20) étant adapté à transmettre un signal à voltage positif par rapport à la terre sur la broche d'entrée (18) vers le contrôleur (14) via une broche d'entrée alternative (26), aucune information de réamorçage n'étant générée par ledit circuit (20), le voltage positif étant traité comme un signal d'entrée normal générant des informations d'entrées qui sont transmises au contrôleur (14) via la broche d'entrée alternative (26).

2. Module de commande électronique (10) selon la revendication 1, **caractérisé en ce que** ledit signal à voltage négatif est un voltage à courant continu.

3. Module de commande électronique (10) selon la revendication 2, **caractérisé en ce que** la valeur absolue du signal à voltage négatif est supérieure à une valeur prédéterminée.

4. Module de commande électronique (10) selon la revendication 3, **caractérisé en ce que** ladite valeur prédéterminée est supérieure à 6 V.

5. Module de commande électronique (10) selon l'une quelconque des revendications précédentes, **caractérisé en ce que** le circuit de commande (12) est construit dans un boîtier fermé (22).

6. Module de commande électronique (10) selon l'une quelconque des revendications précédentes, **caractérisé en ce que** ladite broche d'entrée (18) est utilisée sous des conditions de fonctionnement normales avec des voltages positifs.

7. Module de commande électronique (10) selon l'une quelconque des revendications précédentes, **caractérisé en ce que** l'unité à mémoire reprogrammable (16) est une unité à mémoire non volatile comme une unité à mémoire flash, ou une unité EEPROM, ou une unité MRAM.
